(19) Europäisches Patentamt
European Patent Office
Office européen des brevets

(11) **EP 2 023 501 B1**

(12) **EUROPÄISCHE PATENTSCHRIFT**

(45) Veröffentlichungstag und Bekanntmachung des Hinweises auf die Patenterteilung:
**16.05.2012 Patentblatt 2012/20**

(51) Int Cl.:
*H04W 52/34* ^(2009.01)    *H04B 3/54* ^(2006.01)

(21) Anmeldenummer: **07113911.7**

(22) Anmeldetag: **07.08.2007**

(54) **Datenübertragungsverfahren**

Data transmission method

Procédé de transmission de données

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**11.02.2009 Patentblatt 2009/07**

(73) Patentinhaber: **ABB Technology AG**
**8050 Zürich (CH)**

(72) Erfinder: **Gnus, Tomaz**
**CH-5430, Wettingen (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**EP-A- 1 394 960      GB-A- 2 408 419**
**US-A1- 2007 036 114   US-A1- 2007 099 577**
**US-A1- 2007 142 087**

**Beschreibung**

TECHNISCHES GEBIET

Die vorliegende Erfindung bezieht sich auf das Gebiet der Datenübertragung. Sie betrifft ein Datenübertragungsverfahren zur gleichzeitigen Übertragung von Nutzdaten mehrerer Dienste gemäss dem Oberbegriff des Patentanspruchs 1.

STAND DER TECHNIK

Ein bidirektionales Datenübertragungssystem umfasst zwei Übertragungsgeräte A und B mit je einer Quelle oder einem Sender (Transmitter Tx) und einer Senke oder einem Empfänger (Receiver Rx) und ist im Allgemeinen spannungs- beziehungsweise leistungsbegrenzt. Ein derartiges System unterstützt typischerweise verschiedene unabhängige und gleichzeitig genutzte Dienste oder Services. Eine Übertragung von Nutzdaten der einzelnen Dienste zwischen den Übertragungsgeräten erfolgt über einen Übertragungskanal, welcher äusseren Einflüssen ausgesetzt ist und dessen Kanalqualität die Performance oder Qualität der einzelnen Dienste beeinflusst.

Bei heute üblichen Systemen wird die maximal verfügbare Leistung des Senders auf die einzelnen Dienste statisch verteilt. Eine Ausnahme davon bildet die priorisierte Schutzsignalübertragung, beispielsweise die Fernübertragung von Schutz-Auslösesignalen in so genannten "Fernauslösegeräten" über Energieversorgungsleitungen (Power Line Carrier Communication PLC): Da Schutzsignale nur im Falle eines Fehlers der von den Schutzsystemen überwachten Objekte zum Einsatz gelangen, werden keine Leistung, oder je nach System nur ein geringer Leistungsanteil, zur Übertragung eines Ruhesignals und Überwachung des Kanals für diesen Dienst benötigt. Im Fehlerfall werden andere Dienste abgeschaltet und die frei gewordene Leistung der Schutzsignalübertragung zur Verfügung gestellt.

Die statische Leistungsverteilung der heutigen Umsetzung erweist sich oft als Nachteil, denn ein bestimmter Leistungsanteil wird jedem Dienst zur Verfügung gestellt, unabhängig davon, ob der einzelne Service nun zu jedem Zeitpunkt den vollen Leistungsanteil nutzt oder unter bestimmten Bedingungen auch mit mehr oder weniger Leistung arbeiten könnte. Service-spezifische Einflüsse wie beispielsweise eine Erhöhung beziehungsweise Verringerung der Datenrate und äussere Einflüsse wie beispielsweise bessere beziehungsweise schlechtere Kanalbedingungen haben keinen Einfluss auf die konventionelle Leistungsverteilung und führen lediglich, falls überhaupt, zu einer konservativeren Leistungsaufteilung.

In der Patentanmeldung EP 1367739 wird ein Verfahren zur Sendeleistungssteuerung eines Mobilfunksystems mit Mehrträger (multi carrier) Übertragungssystem vorgestellt, bei welchem ein zu übertragendes Signal auf verschieden Subträger aufgeteilt wird. Da jeder Träger des Mehrträgersystems individuelle Ausbreitungs- beziehungsweise Kanaleigenschaften hat, werden nicht alle Träger hinsichtlich ihrer Leistungssteuerung gleich behandelt. Träger mit vergleichbaren Kanaleigenschaften werden zu Trägergruppen zusammengefasst, welchen jeweils ein Sendeleistungssteuersignal zugeordnet ist.

Im Dokument EP 1394960 wird ein Verfahren zur Datenübertragung über eine Energieversorgungsleitung beschrieben.

DARSTELLUNG DER ERFINDUNG

Aufgabe der vorliegenden Erfindung ist es, ein Datenübertragungssystem für die parallele und effiziente Übertragung von Nutzdaten unterschiedlicher Dienste zu schaffen. Diese Aufgabe wird durch ein Datenübertragungsverfahren und ein Übertragungsgerät mit den Merkmalen des Patentanspruches 1 beziehungsweise 8 gelöst. Weitere vorteilhafte Ausführungsformen gehen aus den abhängigen Patentansprüchen hervor.

Kern der Erfindung ist es, bei einer Änderung einer Eigenschaft eines Dienstes oder einer Qualität eines Übertragungskanals den unterschiedlichen Diensten für die Übertragung von Nutzdaten über den Übertragungskanal unter Umständen mehr oder weniger Leistung zuzuordnen. Durch diese dynamische Anpassung der Leistungsverteilung auf die Dienste unter Berücksichtigung aktueller Eigenschaften oder charakteristischer Kenngrössen der Dienste wird auch unter wechselhaften Bedingungen eine optimale Performance erreicht. Falls dabei ein Leistungsanteil für einen bestimmten Dienst nicht die gewünschte Performance bringt, kann dies ein Abschalten des Dienstes oder eine Erhöhung seines Leistungsanteiles - und somit ein Abschalten eines anderen Dienstes - zur Folge haben.

Gemäss einer ersten Ausführungsform der Erfindung umfassen die Eigenschaften der unterschiedlichen Dienste bestimmte Anforderungen, Klassifizierungen oder Konfigurationen, wie eine variable Datenrate oder eine Priorität gegenüber anderen Diensten. Verfügt ein bestimmter Dienst über eine variable Datenrate, kann beispielsweise ein zumindest vorübergehend reduzierter Leistungsbedarf des Dienstes bei der dynamischen Leistungsanpassung berücksichtigt werden. Eine bevorzugte Unterstützung von wichtigen Diensten, auch bei schlechten Kanalbedingungen beziehungsweise bei Abnahme der Performance, kann durch die Vergabe einer hohen Priorität gesichert werden. Ein Dienst mit hoher Priorität wird dann bei schlechter Performance bevorzugt behandelt ("geboostet") und nicht etwa abgeschaltet.

In einer zweiten Ausführungsform der Erfindung wird eine durch die Qualität des Übertragungskanals beeinflusste Signalqualität eines Dienstes für einen Übertragungspfad in einem Übertragungsgerät ermittelt und unter der Annahme symmetrischer Kanalqualitäten durch den Sender des Übertragungsgerätes für den entgegen gesetzten Übertragungspfad ausgewertet. Alternativ oder zusätzlich kann besagte Signalqualität auch an den Sender des Übertragungsgerätes der Gegenstation geschickt und durch diesen ausgewertet werden.

Gemäss einer weiteren Ausführungsform der Erfindung wird einem Dienst, welcher nur selektiv gebraucht wird, nicht andauernd Leistung zugewiesen. Nur bei Bedarf, beispielsweise zur Übermittlung eines Schutzbefehls im Fehlerfall, wird diesem Dienst kurzzeitig ein dominanter Leistungsanteil zugesprochen.

Bei herkömmlichen Systemen wird die Skalierung der Empfangsleistung (Automatic Gain Control AGC) über einen internen Pilot für alle Dienste gemeinsam durchgeführt. Eine Skalierung der Empfangsleistung pro Service, unter Einführung zusätzlicher Pilotsignale mit entsprechender Bandbreitenzuordnung, erlaubt eine grössere Flexibilität bei der Umsetzung der dynamischen Leistungsverteilung.

Der gesamte Vorgang der Leistungsverteilung sollte im Weiteren sehr träge sein und langsam reagieren, damit einerseits die Skalierung der Empfangsleistung immer ausreichend Zeit hat um nachzuregeln und andererseits keine Leistungssprünge oder vermeidbaren Dienstunterbrüche auftreten. Entsprechend werden für die Signalqualitäten um 2 - 3 dB versetzte Ein- und Ausschaltschwellwerte festgelegt und/oder eine Verzögerungszeitkonstante von 1 min vorgegeben.

KURZE BESCHREIBUNG DER FIGUREN

Nachfolgend wird die Erfindung anhand von Ausführungsbeispielen im Zusammenhang mit den Zeichnungen näher erläutert. Es zeigen

Fig.1    Relative Signalqualität und Leistungszuordnung verschiedener Dienste,

Fig.2    Prinzipielles Vorgehen zur Leistungsneuverteilung,

Fig.3    Leistungsneuverteilung bei symmetrischen Kanalcharakteristiken, und

Fig.4    Leistungsneuverteilung im Master-Slave Verfahren.

WEGE ZUR AUSFÜHRUNG DER ERFINDUNG

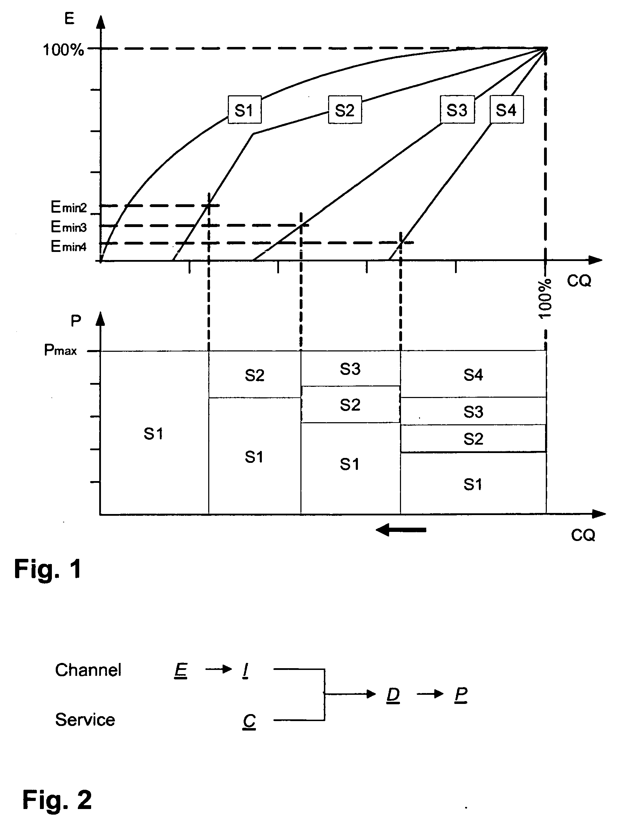

In Fig.1 ist dargestellt, wie vier verschiedene Dienste S1, S2, S3, S4 unterschiedliches Verhalten bei einer Änderung der Kanalqualität (Channel Quality CQ) aufweisen. Letztere ist auf der horizontalen Achse aufgetragen und entspricht für jeden Dienst einem normierten Wert des Rauschabstandes (Signal to Noise Ratio SNR) oder der Bitfehlerrate (Bit Error Rate BIR). Die Nutzbarkeit oder Effizienz der einzelnen Dienste wird durch die Kanalqualität *unterschiedlich* beeinträchtigt. Je mehr Störungen auf dem Kanal, desto schlechter funktionieren die einzelnen Dienste, wobei je nach Art der Dienste diese mehr oder weniger resistent auf äussere Einflüsse reagieren. In der oberen Graphik von Fig.1 sind relative Signalqualitätskurven (Signal Quality, Efficiency E) der vier Dienste einzeln eingezeichnet. Diese hängen von der Art des Dienstes sowie vom gewählten Modulationsverfahren und/oder weiteren Übertragungsparametern ab.

Jeder Dienst *i* hat eine eigene Grenze der zulässigen Effizienz beziehungsweise Signalqualität $E_{min,i}$ unterhalb welcher der Dienst keine sinnvolle Nutzung mehr zulässt. Bei Unterschreitung von $E_{min,i}$ wird der Dienst entweder abgeschaltet, oder er kann "geboostet" werden falls ihm eine hohe Priorität zugewiesen wurde. Die untere Grafik in Fig.1 zeigt beispielhaft auf, wie bei einer Änderung der Kanalqualität die einzelnen Dienste zu- oder weggeschaltet werden und dadurch die Gesamtsendeleistung (Power P) neu verteilt wird.

Nimmt beispielsweise die Kanalqualität wie durch den horizontalen Pfeil in der unteren Graphik von Fig.1 angedeutet ab, unterschreitet die Signalqualität $E_4$ von S4 den Minimalwert $E_{min,4}$. Der betroffene Service oder ein anderer Dienst *n* mit niedriger Priorität wird ausgeschaltet und die verfügbare Leistung $P_{max}$ im einfachsten Fall wie folgt adaptiv, basierend auf der bisherigen Leistungsverteilung ($\alpha_1...\alpha_n$), neu verteilt.

$$P_{\max} = P_{S1} + P_{S2} + .... + P_{S(n-1)}$$

$$P_{Si} = \frac{1}{1-\alpha_n}\alpha_i P_{\max}$$

wobei $\sum_{i=1}^{n}\alpha_i = 1$ und $a_i > 0$.

Alternativ dazu können alle möglichen konfigurationsabhängigen Leistungsverteilungen durch den Benutzer oder Systemanwender in eine Tabelle geschrieben werden. Diese Tabelle gibt dann an, bei welchen Szenarien, d.h. unter welchen Kanalbedingungen und bei welchen Prioritäts- beziehungsweise Leistungsanforderungen der Services welcher Leistungsanteil zu verwenden ist.

In verallgemeinerter Form kann das Vorgehen zur Leistungsneuverteilung gemäss dem Diagramm in Fig.2 dargestellt werden. Dabei sind die im Folgenden aufgeführten Grössen $\underline{E}$, $\underline{I}$, $\underline{C}$, $\underline{D}$, $\underline{P}$ Vektoren mit jeweils einem Element oder Eintrag für jeden der n unabhängigen Dienste:

-    Ermittlung der *Signalqualität* $\underline{E}$ ($E_{S1}$, $E_{S2}$, ..., $E_{Sn}$) der einzelnen Dienste, beispielsweise SNR, BER oder Euklid'scher Abstand, und Vergleich mit der Effizienzgrenze ($E_{min,i}$). Dies kann über einen gemeinsamen Systemdienst (Pilot) oder über den einzelnen Service durchgeführt werden (nach dem Ausschalten eines Dienstes dient der Pilot als Informationsquelle für die Wiedereinschaltung dieses Dienstes).
- Konsolidierung aller Informationen $I$ ($I_{S1}$, $I_{S2}$, ..., $I_{Sn}$) betreffend eine Änderung der Signalqualität $E$ und bedingt durch eine Änderung der Kanalqualität CQ.
- Ermittlung der Diensteigenschaften $C$ ($C_{S1}$, $C_{S2}$, ..., $C_{Sn}$) beziehungsweise deren Änderung, umfassend beispielsweise eine aktuelle Leistungsanforderung, eine Effizienzgrenze oder eine Priorität.
- Entscheidungsfindung $D$ und Umverteilung der Leistung $P$.

Während die Diensteigenschaften $C$ für beziehungsweise durch jeden Benutzer einzeln festzulegen und anzupassen sind, kann die Information $I$ zur Signalqualitätsänderung entweder nur bei einem oder bei beiden Übertragungsgeräten ermittelt werden: Die beiden Übertragungsgeräte oder Stationen können in Sende- und Empfangsrichtung die gleiche oder möglicherweise unterschiedliche Leistungsverteilungen haben. Da die Signalqualität grundsätzlich nur auf der Empfangsseite ermittelt werden kann, ist eine Signalisierung zwischen den Stationen vor beziehungsweise nach der Leistungsumverteilung in den meisten der im Folgenden dargestellten Fällen sinnvoll.

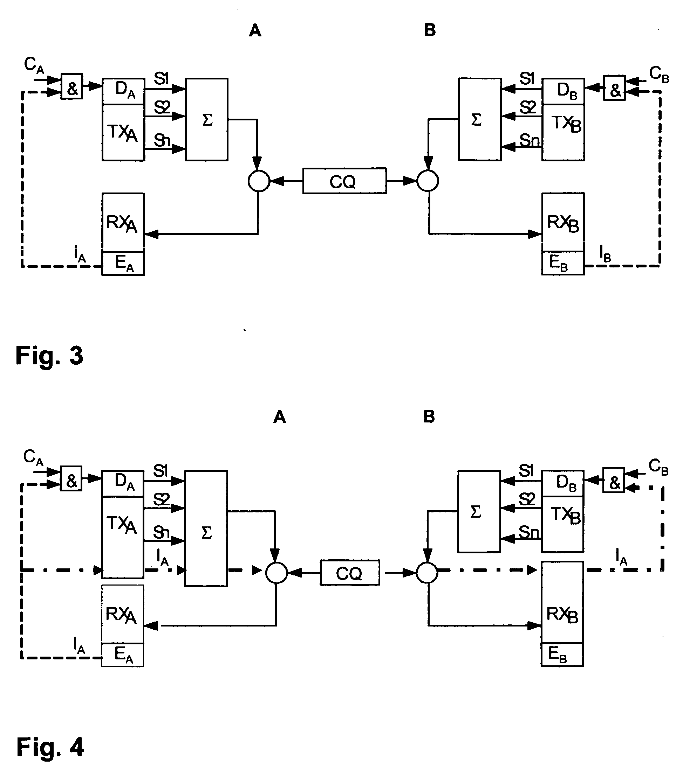

Gemäss Fig.3 erfolgt die Leistungsverteilung in den Teilsystemen oder Übertragungsgeräten A, B unabhängig, d.h. es sind keine synchronen Leistungsverteilungswechsel vorgesehen. Es muss keine Information über den Kanal übertragen werden, wenn symmetrische Kanalcharakteristiken (Sendeband einer Station verhalte sich gleich wie deren Empfangsband) angenommen werden. Somit trägt nur die über den eigenen Empfänger $RX_A$, $RX_B$ vorgenommene Signalqualitätsermittlung $E_A$, $E_B$ beziehungsweise Information zu deren Änderung $I_A$, $I_B$ (gestrichelte Linie), zusammen mit den möglicherweise nicht identischen Eigenschaften $C_A$, $C_B$, pro Station zur Entscheidungsfindung $D_A$, $D_B$ bei. Die zu übertragenden Dienste werden getrennt erzeugt, gemäss aktuellster Entscheidung $D_A$, $D_B$ entsprechend ihrem Leistungsanteil gewichtet und an den mit Σ bezeichneten Stellen der Sender zusammengemischt. Dieses Prinzip kann auch als "open loop" Prinzip bezeichnet werden.

Gemäss Fig.4 erfolgt die Leistungsverteilung abhängig im Master-Slave Verfahren, wobei die Station A als Master fungiert und alleine die Signalqualität für die Dienste ermittelt. Deren Änderungsinformation $I_A$ wird über den Kanal an den Slave, d.h. die Station B übertragen (strichpunktierte Linie). Es werden gleiche Kanalcharakteristiken für beide Übertragungsrichtungen A -> B und B-> A angenommen. Dieses Prinzip kann auch als "closed loop" Prinzip bezeichnet werden.

Dieses Verfahren kann auch in Gegenrichtung angewandt werden. Die Signalqualität wird dann von beiden Stationen ermittelt und zur Senderstation übertragen. Die Entscheidung $D_A$, $D_B$ wird pro Übertragungspfad A -> B und B-> A unabhängig vom gegenrichtigen Übertragungspfad basierend auf der übermittelten Information $I_B$, $I_A$ getroffen. Es werden keine Kanalcharakteristiken angenommen. In einer Kombination zwischen "closed loop" und "open loop" wird die Signalqualität von beiden Stationen ermittelt und zur Senderstation übertragen. Die Entscheidung $D_A$, $D_B$ wird jeweils von beiden Übertragungspfaden beeinflusst (RxB → TxA UND RxA → TxB). Mit diesem kombinierten Prinzip wird eine grösstmögliche Sicherheit und Synchronität erreicht und ist vor allem sinnvoll bei bidirektionalen Diensten mit einer gegenseitigen Abhängigkeit zwischen den beiden Übertragungsrichtungen.

Die unterschiedlichen Dienste S1 - Sn sind beispielsweise Sprache (Speech), Daten1 (D1), Daten2 (D2), Fernauslösung (teleprotection TPE) und ein Pilotkanal (P). Letzterer umfasst bevorzugt einen Embedded Operation Channel (EOC) zum Zweck der Übertragung oder Signalisierung der Information $I$. Der Pilot dient weiter zur Skalierung der Empfangsleistung (Automatic Gain Control AGC), was bei der Leistungsneuverteilung berücksichtigt werden muss, da der Pegel eines einzigen Pilotkanals via AGC auf alle Dienste rückwirkt.

**Patentansprüche**

1. Datenübertragungsverfahren zur gleichzeitigen Übertragung von Nutzdaten mehrerer Dienste (S1...Sn) mit unterschiedlichen Eigenschaften ($C$) von einem Sender (A) mit begrenzter Sendeleistung über eine Energieversorgungsleitung, PLC, als Übertragungskanal zu einem Empfänger (B), **dadurch gekennzeichnet, dass** die Dienste (S1...Sn) zwei oder mehr Dienste zur Übertragung von Daten, Sprache, Ruhesignal, Pilotsignal und Auslösesignalen umfassen, und dass bei einer Änderung einer Eigenschaft ($C_i$) und/oder einer Änderung einer Signalqualität ($E_i$) eines Dienstes eine Aufteilung der Sendeleistung des Senders (A) auf die Dienste (S1...Sn) unter Berücksichtigung ihrer aktuellen Eigenschaften ($C$) angepasst wird.

2. Datenübertragungsverfahren nach Anspruch 1, **dadurch gekennzeichnet, dass** die Aufteilung der Sendeleistung aktuelle Eigenschaften ($C$) umfassend einen benötigten Leistungsbedarf oder eine Priorität eines Dienstes (S1... Sn) berücksichtigt.

3. Datenübertragungsverfahren nach Anspruch 1, **dadurch gekennzeichnet, dass** die Änderung einer Signalqualität ($E_i$) eines Dienstes in einem den Sender (A) umfassenden Übertragungsgerät ermittelt wird.

4. Datenübertragungsverfahren nach Anspruch 1, **dadurch gekennzeichnet, dass** die Änderung einer Signalqualität ($E_i$) eines Dienstes in einem den Empfänger (B) umfassenden Übertragungsgerät ermittelt und über den Übertragungskanal an ein den Sender (A) umfassendes Übertragungsgerät übermittelt wird.

5. Datenübertragungsverfahren nach Anspruch 1, **dadurch gekennzeichnet, dass** die Aufteilung der Sendeleistung bei Bedarf einem Dienst zur Übertragung eines Schutzsignals kurzfristig alle Leistung zuordnet.

6. Datenübertragungsverfahren nach Anspruch 1, **dadurch gekennzeichnet, dass** den Diensten (S1...Sn) unterschiedliche Pilotsignale zur Skalierung der Empfangsleistung (AGC) zugeordnet sind.

7. Datenübertragungsverfahren nach Anspruch 1, **dadurch gekennzeichnet, dass** die Aufteilung der Sendeleistung gemäss einer vorgegebenen Tabelle erfolgt.

8. Übertragungsgerät mit einem Sender (A) mit begrenzter Sendeleistung zur gleichzeitigen Übertragung von Nutzdaten mehrerer Dienste (S1...Sn) mit unterschiedlichen Eigenschaften ($C$) über eine Energieversorgungsleitung, PLC, als Übertragungskanal zu einem Empfänger (B),
   **dadurch gekennzeichnet, dass** die Dienste (S1...Sn) zwei oder mehr Dienste zur Übertragung von Daten, Sprache, Ruhesignal, Pilotsignal und Auslösesignalen umfassen, und dass das Übertragungsgerät über eine dynamische Leistungszuordnung verfügt, welche bei einer Änderung einer Eigenschaft ($C_i$) und/oder einer Änderung einer Signalqualität ($E_i$) eines der mehreren, gleichzeitig über den Übertragungskanal zu dem Empfänger (B) zu übertragenden Dienste (S1...Sn) eine Aufteilung der Sendeleistung des Senders (A) auf die Dienste (S1... Sn) unter Berücksichtigung ihrer aktuellen Eigenschaften ($C$) anpasst.

9. Übertragungsgerät nach Anspruch 8, **dadurch gekennzeichnet, dass** die dynamische Leistungszuordnung aktuelle Eigenschaften ($C$) umfassend einen benötigten Leistungsbedarf oder eine Priorität eines Dienstes (S 1... Sn) berücksichtigt.

**Claims**

1. Data transmission method for simultaneous transmission of payload data of a plurality of services (S1...Sn) with different characteristics ($C$) from a transmitter (A) with limited transmission power via a power supply line (PLC) as transmission channel to a receiver (B), **characterized in that** the services (S1...Sn) comprise two or more services for transmission of data, speech, rest signal, pilot signal and initiating signals, and **in that**, when there is a change in a characteristic ($C_i$) and/or a change in a signal

quality ($E_i$) of a service, the transmission power of the transmitter (A) is shared, matched to the services (S1...Sn), while taking account of their instantaneous characteristics ($C$).

2. Data transmission method according to Claim 1, **characterized in that** the sharing of the transmission power takes account of the instantaneous characteristics ($C$), comprising a required power demand or a priority of the service (S1...Sn).

3. Data transmission method according to Claim 1, **characterized in that** the change in a signal quality ($E_i$) of a service is determined in a transmission appliance which comprises the transmitter (A).

4. Data transmission method according to Claim 1, **characterized in that** the change in a signal quality ($E_i$) of a service is determined in a transmission appliance which comprises the receiver (B) and is transmitted via the transmission channel to a transmission appliance which comprises the transmitter (A).

5. Data transmission method according to Claim 1, **characterized in that**, when required, the sharing of the transmission power briefly allocates all the power, when required, to one service for transmission of a protection signal.

6. Data transmission method according to Claim 1, **characterized in that** different pilot signals are allocated to the services (S1...Sn), for scaling of the received power (AGC).

7. Data transmission method according to Claim 1, **characterized in that** the transmission power is shared in accordance with a predetermined table.

8. Transmission appliance having a transmitter (A) with limited transmission power for simultaneous transmission of payload data of a plurality of services (S1...Sn) with different characteristics ($C$) Via a power supply line (PLC) as transmission channel to a receiver (B),
   **characterized in that** the services (S1...Sn) comprise two or more services for transmission of data, speech, rest signal, pilot signal and initiating signals, and **in that** the transmission appliance has a dynamic power allocation which, in the event of a change in a characteristic ($C_i$) and/or a change in a signal quality ($E_i$) of one of the plurality of services (S1...Sn) to be transmitted simultaneously via the transmission channel to the receiver (B), adapts the sharing of the transmission power of the transmitter (A) between the services (S1...Sn), taking account of their instantaneous characteristics ($C$).

**9.** Transmission appliance according to Claim 8, **characterized in that** the dynamic power allocation takes account of instantaneous characteristics (*C*) comprising a required power demand or a priority of a service (S1...Sn).

## Revendications

**1.** Procédé de transmission de données pour la transmission simultanée de données d'utilisateurs de plusieurs services (S1...Sn) ayant différentes propriétés (*C*), d'un émetteur (A) ayant une puissance d'émission limitée, par l'intermédiaire d'une ligne d'alimentation en énergie, PLC, en tant que canal de transmission, à un récepteur (B),
**caractérisé en ce que** les services (S1...Sn) comprennent deux ou plusieurs services destinés à la transmission de données, de voix, d'un signal de repos, d'un signal pilote et de signaux de déclenchement, et **en ce que** lors d'une modification d'une propriété ($C_i$) et/ou lors d'une modification de la qualité d'un signal ($E_i$) d'un service, une répartition de la puissance d'émission de l'émetteur (A) est adaptée aux services (S1...Sn) en tenant compte de leurs propriétés instantanées (*C*).

**2.** Procédé de transmission de données selon la revendication 1, **caractérisé en ce que** la répartition de la puissance d'émission tient compte de propriétés instantanées (*C*) comprenant une demande de puissance nécessaire ou une priorité d'un service (S1...Sn).

**3.** Procédé de transmission de données selon la revendication 1, **caractérisé en ce que** la modification de la qualité d'un signal ($E_i$) d'un service est déterminée dans un dispositif de transmission comprenant l'émetteur (A).

**4.** Procédé de transmission de données selon la revendication 1, **caractérisé en ce que** la modification de la qualité d'un signal ($E_i$) d'un service est déterminée dans un dispositif de transmission comprenant le récepteur (B) et est communiquée à un dispositif de transmission comprenant l'émetteur (A) par l'intermédiaire du canal de transmission.

**5.** Procédé de transmission de données selon la revendication 1, **caractérisé en ce que** la répartition de la puissance d'émission alloue sur demande à court terme la totalité de la puissance à un service destiné à la transmission d'un signal de protection.

**6.** Procédé de transmission de données selon la revendication 1, **caractérisé en ce que** différents signaux pilotes sont alloués aux services (S1...Sn) pour l'adaptation d'échelle de la puissance de réception (CAG, Commande automatique de gain).

**7.** Procédé de transmission de données selon la revendication 1, **caractérisé en ce que** l'allocation de la puissance d'émission s'effectue en fonction d'une table prédéfinie.

**8.** Dispositif de transmission comprenant un émetteur (A) à puissance d'émission limitée destiné à la transmission simultanée de données d'utilisateurs de plusieurs services (S1...Sn) ayant différentes propriétés (*C*), par l'intermédiaire d'une ligne d'alimentation en énergie, PLC, en tant que canal de transmission, à un récepteur (B),
**caractérisé en ce que** les services (S1...Sn) comprennent deux ou plusieurs services destinés à la transmission de données, de voix, d'un signal de repos, d'un signal pilote et de signaux de déclenchement, et **en ce que** le dispositif de transmission met en oeuvre, par l'intermédiaire d'une allocation dynamique de puissance qui, lors d'une modification d'une propriété ($C_i$) et/ou lors d'une modification de la qualité d'un signal ($E_i$) de l'un des multiples services (S1...Sn) devant être transmis simultanément par l'intermédiaire du canal de transmission au récepteur (B), adapte la répartition de la puissance d'émission de l'émetteur (A) aux services (S1...Sn) en tenant compte de leurs propriétés instantanées (*C*).

**9.** Dispositif de transmission de données selon la revendication 8, **caractérisé en ce que** l'allocation dynamique de puissance tient compte de propriétés instantanées (*C*) comprenant une demande de puissance nécessaire ou une priorité d'un service (S1...Sn).

Fig. 1

Fig. 2

**Fig. 3**

**Fig. 4**

**IN DER BESCHREIBUNG AUFGEFÜHRTE DOKUMENTE**

**In der Beschreibung aufgeführte Patentdokumente**

- EP 1367739 A

- EP 1394960 A